# EUROPÄISCHE PATENTSCHRIFT

(11) **EP 3 335 309 B1**
(45) Veröffentlichungstag und Bekanntmachung des Hinweises auf die Patenterteilung: **26.02.2020**
(21) Anmeldenummer: 16759677.4
(22) Anmeldetag: 28.07.2016
(51) Int. Cl.: H02N 2/00

(54) **ULTRASCHALLMOTOR**
ULTRASONIC MOTOR
MOTEUR À ULTRASONS

(30) Priorität: 14.08.2015 DE 102015113472
(43) Veröffentlichungstag der Anmeldung: 20.06.2018
(73) Patentinhaber: Physik Instrumente (PI) GmbH & Co. KG, 76228 Karlsruhe (DE)
(72) Erfinder: PHILIPS, Bernd, 76227 Karlsruhe (DE); ROSENKRANZ, Mathias, 76137 Karlsruhe (DE); WIENECKE, Dieter, 37136 Landolfshausen (DE); SINSKE, Kurt, 37130 Gleichen (DE)
(74) Vertreter: Schatt, Markus F.
(86) Internationale Anmeldenummer: PCT/DE2016/100346
(87) Internationale Veröffentlichungsnummer: WO 2017/028840

(56) Entgegenhaltungen:
- DE-A1-102008 026 429
- DE-B3-102014 222 026
- US-A1- 2005 258 711
- US-A1- 2010 245 518
- US-A1- 2011 141 584
- US-A1- 2013 140 953

## Beschreibung

Die Erfindung betrifft einen Ultraschallmotor nach den Ansprüchen 1 bis 11, sowie eine Antriebsvorrichtung nach Anspruch 12.

Aus der US 2010/0245518 A1, der US 2013/140953 A1 und der DE 10 2008 026429 A1 ist jeweils ein Ultraschallmotor gemäß der Präambel des Anspruchs 1 bekannt, bei dem zwei Federn oder Federarme, die symmetrisch und seitlich zum Ultraschallaktor liegen, diesen parallel gegen ein anzutreibendes Element drücken. Aus der DE 10 2013 204 026 A1 ist gemäß Fig. 8 ein Ultraschallmotor bekannt, bei welchem ein Ultraschallaktor in einer Aktorhalterung gehalten ist, und an der Aktorhalterung zwei Federn angreifen, welche die Aktorhalterung und mit dieser den Ultraschallaktor gegen ein Goniometerblech drücken. Das Goniometerblech weist einen Durchbruch auf, durch welchen ein zum Kontakt mit einem anzutreibenden Element vorgesehenes Friktionselement hindurchragt.

Das Goniometerblech erlaubt hierbei insbesondere eine Verschwenkung der Aktorhalterung und somit auch des Ultraschallaktors um eine Achse, welche durch den Kontaktpunkt bzw. durch die Kontaktfläche zwischen Friktionselement und einem anzutreibenden Element und parallel zur Längserstreckungsrichtung des Goniometerblechs bzw. parallel zur Längserstreckungsrichtung des Ultraschallaktors verläuft. Mit anderen Worten erlaubt das Goniometerblech eine Verschwenkung der Aktorhalterung bzw. des Ultraschallaktors um den Kontaktpunkt bzw. um die Kontaktfläche zwischen Friktionselement und dem anzutreibenden Element aus der Ebene, in welcher die Aktorhalterung bzw. der Ultraschallaktor im unverschwenkten Zustand liegt. Hierdurch kann das Friktionselement seine Ausrichtung gegenüber der entsprechenden Kontaktfläche des anzutreibenden Elements anpassen, so dass stets ein optimaler Kontakt zwischen Friktionselement und der Kontaktfläche des anzutreibenden Elements besteht.

Nachteilig bei dem aus der DE 10 2013 204 026 A1 bekannten Ultraschallmotor ist hierbei, dass die Federn die zuvor beschriebene Verschwenkung der Aktorhalterung bzw. des Ultraschallaktors forcieren. Denn sobald die Aktorhalterung einmal die in Fig. 8 gezeigte ideale bzw. unverschwenkte Lage durch Verschwenkung verlassen hat, resultieren Kraftkomponenten der Federn in einer Richtung, welche im Wesentlichen senkrecht zu den Hauptflächen des Ultraschallaktors angeordnet ist, wobei diese Kraftkomponenten bewirken, dass die eingeschlagene Verschwenkung weiter vorangetrieben und verstärkt wird. Ein Zurückschwenken der Aktorhalterung bzw. des Ultraschallaktors und somit der beabsichtigte optimale Kontakt zwischen Friktionselement und der entsprechenden Kontaktfläche des anzutreibenden Elements wird somit erschwert. Daraus resultiert letztlich ein weniger effektiver und weniger zuverlässiger Ultraschallmotor.

Weiterhin nachteilig bei den verwendeten Federn ist deren nichtlineare Kraftentfaltung, so dass mit zunehmender Entspannung der Federn eine Verringerung der Anpresskraft des Friktionselements gegen das anzutreibende Element einhergeht. Auch dieser Umstand führt zu einem weniger effektiven und weniger zuverlässigen Ultraschallmotor.

Es ist daher Aufgabe der Erfindung, einen Ultraschallmotor bereitzustellen, welcher in der Lage ist, die zuvor aufgeführten Nachteile bekannter Ultraschallmotoren zu reduzieren bzw. zu beseitigen. Insbesondere ist es Aufgabe der Erfindung, einen effektiveren und zuverlässigeren Ultraschallmotor bereitzustellen.

Diese Aufgabe wird gelöst durch einen Ultraschallmotor nach Anspruch 1, wobei die sich daran anschließenden Unteransprüche mindestens zweckmäßige Ausgestaltungen und Weiterbildungen umfassen.

Demnach wird ausgegangen von einem Ultraschallmotor mit einem in einer Halterung gelagerten Ultraschallaktor in Form einer Platte mit zwei flächenmäßig größten und gegenüberliegend angeordneten Hauptflächen und wenigstens vier die Hauptflächen miteinander verbindenden Seitenflächen, wobei an einer der Seitenflächen wenigstens ein zum Friktionskontakt mit einem anzutreibenden Element vorgesehenes Friktionselement angeordnet ist, und die dem Friktionselement gegenüberliegend angeordnete Seitenfläche hierbei eine Gegenseitenfläche definiert. Der Friktionskontakt zwischen dem Friktionselement und dem anzutreibenden Element, vorzugsweise über eine Friktionsfläche des anzutreibenden Elements, ist hierbei entweder punktförmig oder flächig, so dass entweder ein Punktkontakt oder ein Flächenkontakt vorherrscht.

Zudem definiert die Richtung einer Verbindungslinie V, welche durch den Friktionspunkt oder die Friktionsfläche und den Schwerpunkt S des Ultraschallaktors und hierbei parallel zu den Hauptflächen des Ultraschallaktors verläuft, eine Wirkrichtung. Weiterhin definiert eine Ebene, durch welche die Verbindungslinie in einem im Wesentlichen senkrechten Winkel hindurchtritt und die den Ultraschallaktor schneidet, eine Wirkebene W. Der zuvor verwendete Ausdruck, im Wesentlichen' bedeutet hier und in analoger Weise auch an entsprechenden weiteren Stellen der Beschreibung, dass eine geringfügige Abweichung von +/- 5% möglich ist.

Die Halterung weist wenigstens zwei Krafteinleitungsabschnitte auf, welche eine Kraft in die Halterung einleiten, um diese und mit dieser den Ultraschallaktor in einer zu der Wirkrichtung parallelen Richtung zu verschieben. Hierbei kann auch nur eine Komponente der in die Halterung eingeleiteten Kraft für deren Verschiebung in einer zur Wirkrichtung parallelen Richtung sorgen. Durch die beschriebene Verschiebung resultiert ein Anpressen des Friktionselements gegen das anzutreibende Element, so dass bei gegebenem Reibungskoeffizienten zwischen dem Material des Friktionselements und dem Material des anzutreibenden Elements bzw. der Friktionsfläche des anzutreibenden Elements die Übertragung von Antriebskräften vom Friktionselement auf das anzutreibende Element ermöglicht ist.

Die Krafteinleitungsabschnitte sind jeweils in der Wirkebene W angeordnet bzw. liegen in dieser, wobei der Schnittpunkt SP der Verbindungslinie V mit der Wirkebene W entweder mit dem Schwerpunkt S des Ultraschallaktors zusammenfällt oder aber zwischen dem Schwerpunkt S des Ultraschallaktors und der Seitenfläche des Ultraschallaktors, an welcher das Friktionselement angeordnet ist, gelegen ist. Hierdurch ergibt sich eine Anordnung der Krafteinleitungsabschnitte, bei welcher diese jeweils seitlich neben und beabstandet zu dem Ultraschallaktor gelegen sind. Auf diese Weise gelingt eine Krafteinleitung in die Halterung, bei welcher eine forcierte und sich selbst verstärkende Verschwenkung der Halterung bzw. des Ultraschallaktors um eine Achse, welche innerhalb der Ebene der Kontaktfläche zwischen dem Friktionselement und dem durch das Friktionselement anzutreibenden Element liegt und die parallel zur Längserstreckungsrichtung des Ultraschallaktors verläuft, erschwert bzw. verhindert ist. Dies liegt daran, dass der Abstand zwischen der entsprechenden Krafteinleitungsstelle und der Ebene der Kontaktfläche zwischen dem Friktionselement und dem durch das Friktionselement anzutreibenden Element klein ist, und dadurch der Hebel für eine Kraft bzw. eine Kraftkomponente, die an der Krafteinleitungsstelle in einer Richtung angreift, die im Wesentlichen senkrecht auf einer der Hauptflächen des Ultraschallaktors steht, ebenfalls klein ist, so dass für die vorhergehend beschriebene Verschwenkung der Halterung bzw. des Ultraschallaktors vergleichsweise hohe Kräfte notwendig sind.

Wenigstens einer der Krafteinleitungsabschnitte ist durch einen ersten Permanentmagneten und zwei dem ersten Permanentmagneten jeweils gegenüberliegend angeordnete zweite Permanentmagneten gebildet, und der erste Permanentmagnet und die beiden zweiten Permanentmagneten wirken derart zusammen, dass einer der zweiten Permanentmagneten auf den ersten Permanentmagneten eine anziehende Kraft ausübt, und der andere der zweiten Permanentmagneten auf den ersten Permanentmagneten eine abstoßende Kraft ausübt. Auf diese Weise ist die Einleitung einer konstanten Kraft in die Halterung entlang ihres Verschiebewegs möglich, so dass letztlich das Friktionselement des Ultraschallaktors unabhängig von der (Verschiebe-)Position der Halterung mit einer konstanten Kraft gegen das anzutreibende Element gedrückt ist. Zudem wirkt die Anordnung der Permanentmagneten der zuvor beschriebenen Verschwenkung der Halterung bzw. des Ultraschallaktors entgegen.

Es ist denkbar, dass die Permanentmagnete der Krafteinleitungsabschnitte zumindest teilweise durch entsprechende magnetisierbare Materialien ersetzt sind. Zudem ist denkbar, dass die Permanentmagnete ganz oder teilweise ersetzt sind durch Elektromagnete.

Ebenso kann es von Vorteil sein, dass die Halterung einen Halterungsrahmen, in welchem der Ultraschallaktor spielfrei gehalten bzw. eingesetzt ist, und eine Halterungsvorrichtung, die mit dem Halterungsrahmen zusammenwirkt, aufweist.

Ferner kann es von Vorteil sein, dass die Halterung einen Linearführungsabschnitt aufweist, der durch entsprechende Abschnitte des Halterungsrahmens und der Halterungsvorrichtung gebildet ist und welcher eine Linearbewegung des Ultraschallaktors in einer zu der Wirkrichtung parallelen Richtung und gleichzeitig eine Rotation des Ultraschallaktors um eine Achse K, welche durch den Ultraschallaktor im Wesentlichen parallel zu der Seitenfläche, an welcher das Friktionselement angeordnet ist und im Wesentlichen parallel zu den Hauptflächen des Ultraschallaktors verläuft, zulässt. Mit anderen Worten erlaubt der Linearführungsabschnitt eine Verschiebung der Halterung bzw. des Ultraschallaktors in Richtung des anzutreibenden Elements, wobei gleichzeitig eine Verschwenkung der Halterung bzw. des Ultraschallaktors um den Kontaktpunkt bzw. um die Kontaktfläche zwischen Friktionselement und anzutreibendem Element ermöglicht ist, wobei die entsprechende Verschwenkungsachse VA im Wesentlichen parallel zur Längserstreckungsrichtung des Ultraschallaktors bzw. der Halterung verläuft.

Weiterhin kann es von Vorteil sein, dass der Linearführungsabschnitt gebildet ist durch wenigstens eine im Wesentlichen schlitz- oder langlochförmige Ausnehmung in der Halterungsvorrichtung und durch wenigstens einen korrespondierend geformten Vorsprungsabschnitt des Halterungsrahmens. Auf diese Weise gelingt ein besonders einfach und kostengünstig zu realisierender Linearführungsabschnitt.

Außerdem kann es von Vorteil sein, dass die Halterung wenigstens einen Rotationslagerungsabschnitt aufweist, der durch entsprechende Abschnitte des Halterungsrahmens und der Halterungsvorrichtung gebildet ist, und welcher eine Rotation des Ultraschallaktors um die Achse K bzw. eine Verschwenkung um die Verschwenkungsachse VA zulässt, wobei der Rotationslagerungsabschnitt gleichzeitig eine Linearbewegung des Ultraschallaktors in einer zu der Wirkrichtung parallelen Richtung zulässt.

Desweiteren kann es von Vorteil sein, dass durch den Linearführungsabschnitt und/oder den Rotationslagerungsabschnitt alle weiteren möglichen Beweglichkeitsfreiheitsgrade des Ultraschallaktors unterbunden sind.

Darüber hinaus kann es von Vorteil sein, dass der Rotationslagerungsabschnitt gebildet ist durch einen integral mit dem Halterungsrahmen ausgeführten stiftförmigen Abschnitt mit beidseitigen Endabschnitten, wobei die Endabschnitte eine konvexe Geometrie aufweisen und sich jeweils an einem ebenen Abschnitt der Halterungsvorrichtung abstützen. In besonders bevorzugter Weise besitzen die Endabschnitte eine Kreisabschnittsgeometrie, wobei der zugrunde liegende Kreis einen Durchmesser aufweist, welcher dem Abstand der gegenüberliegend angeordneten ebenen Abschnitte der Halterungsvorrichtung, an welchen sich die Endabschnitte abstützen, entspricht. Auf besonders einfache Weise ist hierdurch ermöglicht, dass der Halterungsrahmen gegenüber der Halterungsvorrichtung um die Achse K rotieren kann, und gleichzeitig ist bei dem gegebenen Eingriffsverhältnis eine Linearverschiebung des Halterungsrahmens gegenüber der Halterungsvorrichtung möglich.

Es kann auch von Vorteil sein, dass der Ultraschallaktor zumindest an Abschnitten der Hauptflächen mit dem Halterungsrahmen verklebt ist. Hierbei kann es insbesondere von Vorteil sein, dass die Abschnitte der Hauptflächen des Ultraschallaktors, die mit dem Halterungsrahmen verklebt sind, keine Abschnitte darstellen, an welchen der Ultraschallaktor im Betrieb Schwingungsknoten ausbildet. Üblicherweise ist es erforderlich oder zumindest von Vorteil, den Ultraschallaktor dort zu halten, wo er während des Betriebs Schwingungsknoten ausbildet. Dadurch wird insbesondere die beabsichtigte Schwingung des Ultraschallaktors nicht negativ beeinflusst, und die für die Halterung günstige Bewegungsarmut ist an diesen Abschnitten vorhanden.

Zudem kann es von Vorteil sein, dass der Halterungsrahmen Polyetheretherketon aufweist und bevorzugt aus Polyetheretherketon besteht. Dieser thermoplastische Werkstoff zeichnet sich insbesondere durch eine hohe thermische Beständigkeit aus. Er lässt sich darüber hinaus gut und dauerhaft mit der Keramik, vorzugsweise einer PZT-Keramik, verbinden bzw. verkleben, und er weist für die erfindungsgemäße Anmeldung vorteilhafte Dämpfungseigenschaften auf.

Es kann auch von Vorteil sein, dass die Halterungsvorrichtung integral mit einem Gehäuse ausgeführt ist, in welchem die Steuerungselektronik für den Ultraschallmotor anordnungsbar ist. Auf diese Weise lässt sich eine sehr kompakte und hoch integrierte Ausführungsform des erfindungsgemäßen Ultraschallmotors realisieren.

Es zeigen in schematischer und nicht maßstäblicher Weise:
Fig.1: einen erfindungsgemäßen Ultraschallmotor in perspektivischer Darstellung;
Fig. 2: eine Schnittdarstellung des Ultraschallmotors gemäß Fig. 1;
Fig. 3: eine weitere Schnittdarstellung des Ultraschallmotors gemäß Fig. 1;
Fig. 4: eine Seitenansicht des Ultraschallmotors gemäß Fig. 1;
Fig. 5: eine Explosionsdarstellung des Ultraschallmotors gemäß Fig. 1;

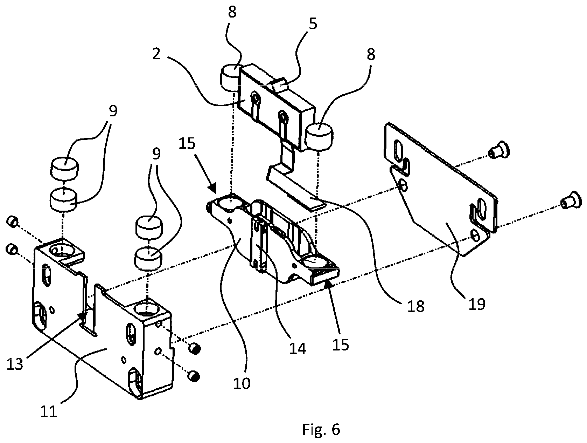

Fig. 6: eine weitere Explosionsdarstellung des Ultraschallmotors gemäß Fig. 1.

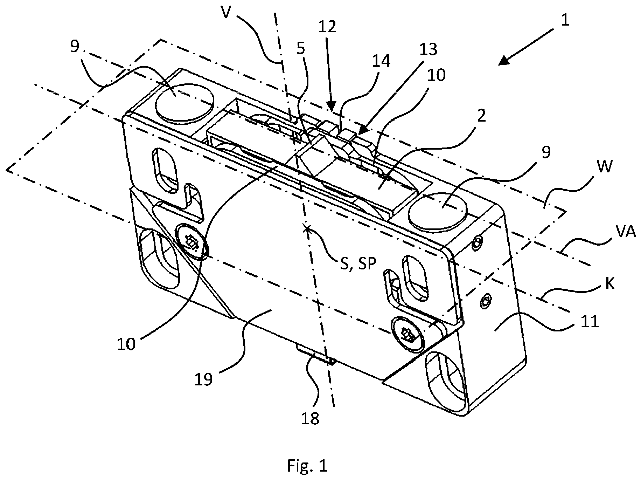

Fig. 1 zeigt eine Ausführungsform eines erfindungsgemäßen Ultraschallmotors, bei welchem der Ultraschallaktor 2 in Form einer Platte mit zwei flächenmäßig größten Hauptflächen und vier die beiden Hauptflächen miteinander verbindenden Seitenflächen aus einem piezokeramischen Material in einem Halterungsrahmen 10 aus Polyetheretherketon angeordnet und mit diesem an Abschnitten seiner Hauptflächen verklebt ist. Der Halterungsrahmen 10 ist so in eine Halterungsvorrichtung 11 eingesetzt, dass im Wesentlichen nur das Friktionselement 5, das an einer der langen Seitenflächen des Ultraschallaktors angeordnet ist, aus der Halterungsvorrichtung 11 hervor- bzw. herausragt.

Das Friktionselement 5 ist zum (Friktions-)Kontakt mit einem nicht dargestellten anzutreibenden Element vorgesehen, und weist zu diesem Zweck eine Friktionsfläche auf. Die Ausrichtung einer Verbindungslinie V, welche durch die Friktionsfläche des Friktionselements 5 und durch den Schwerpunkt des Ultraschallaktors 2 und parallel zu den Hauptflächen verläuft, definiert eine Wirkrichtung, in welcher bzw. parallel zu welcher der Ultraschallaktor bzw. das an diesem angeordnete Friktionselement im Wesentlichen gegen das anzutreibende Element gedrückt ist.

Eine Wirkebene W ist definiert als eine Ebene, durch welche die Verbindungslinie im Wesentlichen senkrecht hindurchtritt und welche gleichzeitig den Ultraschallaktor schneidet bzw. die innerhalb des Ultraschallaktors liegt.

Der Schnittpunkt SP ist definiert durch den Schnittpunkt der Verbindungslinie V mit der Wirkebene W. Der Schnittpunkt SP fällt im Ausführungsbeispiel gemäß Fig. 1 mit dem Schwerpunkt des Ultraschallaktors zusammen.

Integral mit dem Halterungsrahmen 10 ist ein Vorsprungsabschnitt 14 ausgebildet, welcher in eine im Wesentlichen schlitzförmige Ausnehmung 13 der Halterungsvorrichtung 11 eingreift und mit dieser derart zusammenwirkt, dass sich ein Linearführungsabschnitt ergibt, der eine Linearbewegung des Halterungsrahmens 10 und damit eine Linearbewegung des Ultraschallaktors in einer zu der Wirkrichtung parallelen Richtung und gleichzeitig eine geringe Rotationsbewegung des Ultraschallaktors um eine Achse K, welche durch den Ultraschallaktor im Wesentlichen parallel zu der Seitenfläche, an welcher das Friktionselement angeordnet ist und im Wesentlichen parallel zu einer der Hauptflächen verläuft, zulässt.

In der Halterungsvorrichtung 11 sind Permanentmagnete 9 eingesetzt, welche sich jeweils seitlich neben einer kurzen Seitenfläche des Ultraschallaktors befinden. Auf jeder Seite sind hierbei zwei Permanentmagnete 9 vorhanden, von denen in Fig. 1 jeweils nur einer zu sehen ist. Die jeweiligen zwei Permanentmagnete 9 wirken mit einem in dem Halterungsrahmen eingesetzten und in Fig. 1 ebenfalls nicht zu sehenden Permanentmagneten zusammen.

Die Halterungsvorrichtung 11 ist aus Montagegründen zweiteilig ausgeführt, und wird nach Einsetzen des Halterungsrahmen 10 mit dem darin gehalterten Ultraschallaktor 2 mit einem elastischen bzw. federnden Deckblech 19 verschraubt, welches den Halterungsrahmen 10 bzw. dessen Vorsprungsabschnitt 14 mit einer definierten Kraft in die schlitzförmige Ausnehmung 13 der Halterungsvorrichtung drückt.

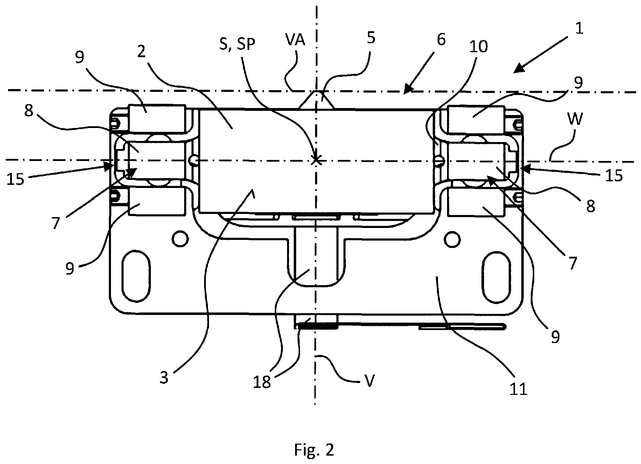

Fig. 2 stellt einen Schnitt der Ultraschallmotors gemäß Fig. 1 entlang einer durch die Linie V und die Achse K aufgespannten Ebene, welche den Ultraschallaktor schneidet, dar.

Anhand dieser Schnittdarstellung sind die Einzelheiten der beiden jeweils seitlich neben dem Ultraschallaktor bzw. dessen kurzen Seitenflächen angeordneten Krafteinleitungsabschnitte 7 zu erkennen, wobei jeder Krafteinleitungsabschnitt zwei Permanentmagnete 9, welche in der Halterungsvorrichtung 11 angeordnet sind, und einen Permanentmagneten 8, welcher in dem Halterungsrahmen 10 angeordnet ist, aufweist. Während die Permanentmagnete 9 jeweils über eine Schraubverbindung innerhalb einer entsprechenden Öffnung der Halterungsvorrichtung 11 fixiert sind, sind die Permanentmagnete 8 in der jeweiligen Öffnung des Halterungsrahmens 10 eingeklebt.

Der in Fig. 2 jeweils obere Permanentmagnet 9 hat auf den jeweiligen Permanentmagneten 8 eine anziehende Wirkung, während der entsprechende untere Permanentmagnet 9 auf denselben Permanentmagneten 8 eine abstoßende Wirkung hat. Somit übt jeder Krafteinleitungsabschnitt eine Kraft auf den Halterungsrahmen und damit auf den Ultraschallaktor aus, welche diesen in einer Richtung parallel der Wirkrichtung zu verschieben sucht. Es sei betont, dass die beiden Krafteinleitungsabschnitte vollkommen identisch ausgeführt sind, und auch insgesamt in geometrischer Hinsicht eine Symmetrie hinsichtlich des erfindungsgemäßen Ultraschallmotors besteht, wobei die Verbindungslinie V gleichzeitig eine Symmetrielinie darstellt.

Im Bereich der Krafteinleitungsabschnitte 7 weist der Halterungsrahmen integral oder einstückig mit diesem ausgeführte Rotationslagerungsabschnitte 15 auf. Jeder Rotationslagerungsabschnitt umfasst hierbei einen stiftförmigen Abschnitt mit beidseitig angeordneten distalen Endabschnitten mit einer konvexen Geometrie, wobei sich die konvex geformten Endabschnitte jeweils ein einer ebenen Gegenfläche der Halterungsvorrichtung abstützen.

Eine flexible Leiterbahn 18 umfasst die elektrischen Zuleitungen für den Ultraschallaktor, welche diesen an seinen Hauptflächen 3 elektrisch leitfähig kontaktieren. Ein Teil der flexiblen Leiterbahn 18 liegt innerhalb der Halterung 6 in einem dafür vorgesehenen Hohlraum und wird über eine entsprechende Öffnung in der Halterung zum Anschluss an einer elektrischen Erregervorrichtung aus dieser herausgeführt.

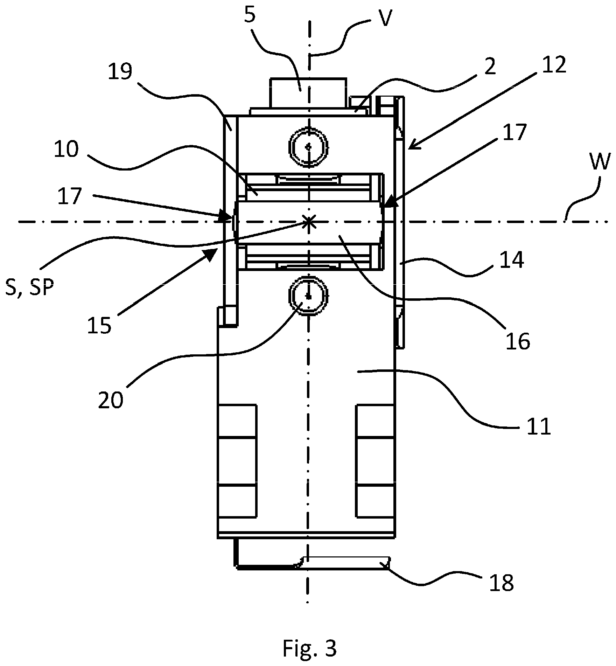

Fig. 3 stellt einen Schnitt des Ultraschallmotors gemäß Fig. 1 entlang einer Ebene dar, welche sowohl die entlang die durch die Linie V und die Achse K aufgespannten Ebene, als auch die Wirkebene W senkrecht schneidet.

Anhand von Fig. 3 lässt sich insbesondere der Aufbau bzw. die Ausführung der Rotationslagerungsabschnitte 15 erkennen, welche jeweils einen integral mit dem Halterungsrahmen 10 ausgebildeten stiftförmigen Abschnitt 16 aufweisen, dessen Symmetrieachse mit der Wirkebene W zusammenfällt. An seinen beiden Endabschnitten 17 weist der stiftförmige Abschnitt 16 eine Kreisabschnittsgeometrie auf, wobei der jeweilige Durchmesser des entsprechenden Kreises dem Abstand zwischen den ebenen Flächen der Halterungsvorrichtung 11 entspricht, an welchen sich die Endabschnitte 17 abstützen. Der in Fig. 3 linke Endabschnitt stützt sich hierbei an einem zugeordneten ebenen Abschnitt des Deckblechs 19 ab, während sich der rechte Endabschnitt an einem zugeordneten ebenen Abschnitt des weiteren Teils der Halterungsvorrichtung 11 abstützt.

Die zuvor beschriebene Geometrie der Endabschnitte 17 ermöglicht, dass der Halterungsrahmen eine Rotationsbewegung um die Achse K bzw. eine Verschwenkbewegung um die Verschwenkungsachse VA vollführen kann. Gleichzeitig erlaubt die entsprechend kleine Kontaktfläche zwischen den Endabschnitten und dem jeweils zugeordneten ebenen Abschnitt der Halterungsvorrichtung auch eine Verschiebung des Halterungsrahmens in einer zur Wirkrichtung parallelen Richtung.

Anhand Fig. 3 sind auch die Befestigungselemente 20 in Form von Schrauben zu erkennen, welche die Permanentmagnete 9 innerhalb der Halterungsvorrichtung 11 fixiert.

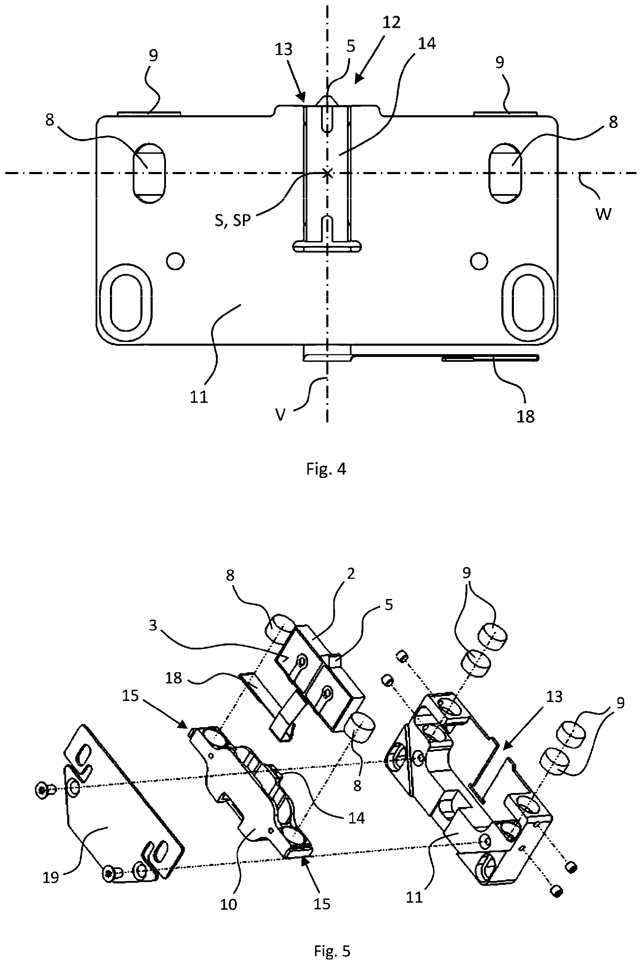

Fig. 4 zeigt den erfindungsgemäßen Ultraschallmotor gemäß Fig. 1 in einer Seitenansicht mit Blick auf den in Fig. 1 rückseitigen und daher dort nicht bzw. nur abschnittsweise erkennbaren Teil des Ultraschallmotors. Besonders gut lässt sich in dieser Ansicht der Linearführungsabschnitt 12 erkennen.

Der Linearführungsabschnitt 12 umfasst die im Wesentlichen schlitzförmige Ausnehmung 13 der Halterungsvorrichtung 11 und den korrespondierend geformten und einstückig mit dem Halterungsrahmen 10 ausgebildeten Vorsprungsabschnitt 14, der in die schlitzförmige Ausnehmung 13 hineinragt bzw. durch diese hindurchragt, wobei die Breite des Vorsprungsabschnitts 14 in etwa der Breite der Ausnehmung 13 entspricht, so dass der Vorsprungsabschnitt im Wesentlichen spielfrei in der Ausnehmung 13 angeordnet ist. Im unteren Bereich weitet sich die Ausnehmung 13, d.h. dort ist der Abstand der gegenüberliegenden Seitenwände größer als die Breite des Vorsprungsabschnitts 14. Zudem weist die Ausnehmung 13 eine größere Länge als der Vorsprungsabschnitt 14 auf.

Durch die entsprechenden Eingriffsverhältnisse kann sich der Halterungsrahmen hinsichtlich einer Linearbewegung nur entlang der Längsausrichtung der im Wesentlichen schlitzförmigen Ausnehmung bewegen, so dass eine Linearführung resultiert. Gleichzeitig erlaubt dieses Eingriffsverhältnis eine gewisse Rotation des Halterungsrahmens um die Achse K, um zu gewährleisten, dass sich das Friktionselement bzw. dessen Friktionsfläche zur Oberfläche bzw. Kontaktfläche des anzutreibenden Elements ausrichten kann.

Der Vorsprungsabschnitt 14 ist an seinen beiden distalen Enden jeweils geschlitzt, so dass sich entsprechende Schenkel des Vorsprungsabschnitts ergeben, welche diesem im Bereich besagter Schenkel eine erhöhte Flexibilität bzw. Elastizität verleihen, welche Fertigungstoleranzen auszugleichen vermögen, so dass eine spielfreie Führung des Vorsprungsabschnitts innerhalb der schlitzförmigen Ausnehmung ermöglicht ist.

Weiterhin ist zu erkennen, dass die Halterungsvorrichtung im Bereich des Linearführungsabschnitts 12 einen vorspringenden Abschnitt aufweist, so dass in diesem Bereich der Abstand der oberen Kante der Halterungsvorrichtung von dem distalen bzw. freien Ende des Friktionselements bzw. von dessen Friktionsfläche geringer ist als im angrenzenden Bereich der Halterungsvorrichtung, was zu einer Verringerung eines möglichen Drehmoments im Bereich der entsprechenden Kontaktstelle zwischen Vorsprungsabschnitt und schlitzförmiger Ausnehmung führt und somit auch die entsprechende Kraft- bzw. Verschleißbelastung reduziert.

## Patentansprüche

1. Ultraschallmotor (1) mit einem Ultraschallaktor (2) in Form einer Platte mit zwei flächenmäßig größten und gegenüberliegend angeordneten Hauptflächen (3) und wenigstens vier die Hauptflächen miteinander verbindenden Seitenflächen (4), wobei an einer der Seitenflächen wenigstens ein Friktionselement (5) mit einem zum Friktionskontakt mit einem anzutreibenden Element vorgesehenen Friktionspunkt oder mit einer Friktionsfläche angeordnet ist, und mit einer Halterung (6), in weicher der Ultraschallaktor eingesetzt ist, wobei die Richtung einer Verbindungslinie V, welche durch den Friktionspunkt oder die Friktionsfläche und den Schwerpunkt S des Ultraschallaktors verläuft, eine Wirkrichtung definiert, und eine Ebene, durch welche die Verbindungslinie in einem im Wesentlichen senkrechten Winkel hindurchtritt und die den Ultraschallaktor schneidet, eine Wirkebene W definiert, und die Halterung (6) wenigstens zwei Krafteinleitungsabschnitte (7) aufweist, welche eine Kraft in die Halterung einleiten, um diese und mit dieser den Ultraschallaktor in einer zu der Wirkrichtung parallelen Richtung zu verschieben, wobei die Krafteinleitungsabschnitte (7) jeweils in der Wirkebene W und seitlich neben und beabstandet zu dem Ultraschallaktor angeordnet sind, und der Schnittpunkt SP der Verbindungslinie V mit der Wirkebene W entweder mit dem Schwerpunkt zusammenfällt oder zwischen dem Schwerpunkt S des Ultraschallaktors und der Seitenfläche des Ultraschallaktors, an welcher das Friktionselement angeordnet ist, gelegen ist, **dadurch gekennzeichnet, dass** wenigstens einer der Krafteinleitungsabschnitte (7) gebildet ist durch einen ersten Permanentmagneten (8) und zwei dem ersten Permanentmagneten jeweils gegenüberliegend angeordnete zweite Permanentmagneten (9), und der erste Permanentmagnet (8) und die beiden zweiten Permanentmagneten (9) derart zusammenwirken, dass einer der zweiten Permanentmagneten (9) auf den ersten Permanentmagneten (8) eine anziehende Kraft ausübt, und der andere der zweiten Permanentmagneten (9) auf den ersten Permanentmagneten (8) eine abstoßende Kraft ausübt.

2. Ultraschallmotor nach Anspruch 1, **dadurch gekennzeichnet, dass** die Halterung (6) einen Halterungsrahmen (10), in welchem der Ultraschallaktor spielfrei gehalten ist, und eine Halterungsvorrichtung (11), die mit dem Halterungsrahmen (10) zusammenwirkt aufweist.

3. Ultraschallmotor nach Anspruch 2, **dadurch gekennzeichnet, dass** die Halterung (6) einen Linearführungsabschnitt (12) aufweist, der durch entsprechende Abschnitte des Halterungsrahmens (10) und der Halterungsvorrichtung (11) gebildet ist und welcher eine Linearbewegung des Ultraschallaktors in einer zu der Wirkrichtung parallelen Richtung und gleichzeitig eine Rotation des Ultraschallaktors um eine Achse K, welche durch den Ultraschallaktor im Wesentlichen parallel zu der Seitenfläche, an welcher das Friktionselement angeordnet ist und im Wesentlichen parallel zu einer der Hauptflächen verläuft, zulässt.

4. Ultraschallmotor nach Anspruch 3, **dadurch gekennzeichnet, dass** der Linearführungsabschnitt (12) gebildet ist durch wenigstens eine im Wesentlichen schlitzförmige Ausnehmung (13) in der Halterungsvorrichtung (11) und durch wenigstens einen korrespondierend geformten Vorsprungsabschnitt (14) des Halterungsrahmens (10).

5. Ultraschallmotor nach einem der Ansprüche 3 oder 4, **dadurch gekennzeichnet, dass** die Halterung (6) wenigstens einen Rotationslagerungsabschnitt (15) aufweist, der durch entsprechende Abschnitte des Halterungsrahmens und der Halterungsvorrichtung gebildet ist, und welcher eine Rotation des Ultraschallaktors um die Achse K zulässt, wobei der Rotationslagerungsabschnitt gleichzeitig eine Linearbewegung des Ultraschallaktors in einer zu der Wirkrichtung parallelen Richtung zulässt.

6. Ultraschallmotor nach einem der Ansprüche 4 bis 5, **dadurch gekennzeichnet, dass** durch den Linearführungsabschnitt und/oder den Rotationslagerungsabschnitt alle weiteren möglichen Beweglichkeitsfreiheitsgrade des Ultraschallaktors unterbunden sind.

7. Ultraschallmotor nach Anspruch 5 oder 6, **dadurch gekennzeichnet, dass** der Rotationslagerungsabschnitt (15) gebildet ist durch einen integral mit dem Halterungsrahmen (10) ausgeführten stiftförmigen Abschnitt (16) mit beidseitigen Endabschnitten (17), wobei die Endabschnitte eine konvexe Geometrie und bevorzugt eine Kreisabschnittsgeometrie aufweisen und sich jeweils an einem ebenen Abschnitt der Halterungsvorrichtung abstützen.

8. Ultraschallmotor nach einem der Ansprüche 2 bis 7, **dadurch gekennzeichnet, dass** der Ultraschallaktor zumindest an Abschnitten der Hauptflächen (3) mit dem Halterungsrahmen (10) verklebt ist.

9. Ultraschallmotor nach Anspruch 8, **dadurch gekennzeichnet, dass** die Abschnitte der Hauptflächen des Ultraschallaktors, die mit dem Halterungsrahmen verklebt sind, keine Abschnitte darstellen, an welchen der Ultraschallaktor im Betrieb Schwingungsknoten ausbildet.

10. Ultraschallmotor nach einem der Ansprüche 2 bis 9, **dadurch gekennzeichnet, dass** der Halterungsrahmen (10) Polyetheretherketon aufweist und bevorzugt aus Polyetheretherketon besteht.

11. Ultraschallmotor nach einem der vorhergehenden Ansprüche, **dadurch gekennzeichnet, dass** mit der Halterungsvorrichtung (11) integral ein Gehäuse zur Aufnahme der Ansteuerungselektronik des Ultraschallaktors ausgebildet ist.

12. Antriebsvorrichtung, umfassend einen Ultraschallmotor nach einem der Ansprüche 1 bis 11 und ein durch den Ultraschallmotor anzutreibendes Element.

## Claims

1. Ultrasonic motor (1) comprising an ultrasonic actuator (2) in the form of a plate with two main surfaces (3) which are largest in terms of area and are arranged opposite one another and with at least four side surfaces (4) which connect the main surfaces to one another, wherein on one of the side surfaces at least one friction element (5) is disposed with a friction point or a friction surface for friction contact with an element to be driven, and with a holder (6) in which the ultrasonic actuator is inserted, wherein the direction of a connection line V which runs through the friction point or the friction surface and through the center of gravity S of the ultrasonic actuator defines an effective direction, and wherein a plane through which the connection line passes at an essentially perpendicular angle and intersects the ultrasonic actuator defines an effective plane W, and the holder (6) comprises at least two force introduction portions (7) which introduce a force into the holder in order to displace the same and with the same the ultrasonic actuator in a direction parallel to the effective direction, wherein the force introduction sections (7) are disposed in each case in the effective plane W and laterally next to and at a distance from the ultrasonic actuator, and the intersection point SP of the connection line V with the effective plane W either coincides with the center of gravity or is disposed between the center of gravity s of the ultrasonic actuator and the side surface of the ultrasonic actuator on which the friction element is arranged, **characterized in that** at least one of the force introduction portions (7) is formed by a first permanent magnet (8) and two second permanent magnets arranged opposite the first permanent magnet in each case, and **in that** the first permanent magnet (8) and the two second permanent magnets (9) interact in such a way that one of the second permanent magnets (9) exerts an attracting force on the first permanent magnet (8), and the other of the second permanent magnets (9) acts on the first permanent magnet (8) exerting a repulsive force.

2. Ultrasonic motor according to claim 1, **characterized in that** the holder (6) comprises a holding frame (10) in which the ultrasonic actuator is held without play and a holding device (11) which interacts with the holding frame (10).

3. Ultrasonic motor according to claim 2, **characterized in that** the holder (6) comprises a linear guidance section (12) which is formed by corresponding sections of the support frame (10) and the holding device (11) is formed and which allows a linear movement of the ultrasonic actuator in a direction parallel to the effective direction and at the same time a rotation of the ultrasonic actuator about an axis K which runs through the ultrasonic actuator substantially parallel to the side surface on which the friction element is arranged and substantially parallel to one of the main surfaces.

4. Ultrasonic motor according to claim 3, **characterized in that** the linear guidance section (12) is formed by at least one substantially slot-shaped recess (13) in the holding device (11) and by at least one correspondingly shaped projection section (14) of the support frame (10).

5. Ultrasonic motor according to one of claims 3 or 4, **characterized in that** the holder (6) comprises at least one rotation bearing section (15) which is supported by corresponding sections of the holding frame and of the holding device, and which allows a rotation of the ultrasonic actuator about the axis K, wherein the rotation bearing section at the same time allows a linear movement of the ultrasonic actuator in a direction parallel to the effective directiont.

6. Ultrasonic motor according to any one of claims 4 to 5, **characterized in that** by the linear guidance section and/or the rotation bearing section all further possible mobility degrees of freedom of the ultrasonic actuator are prevented.

7. Ultrasonic motor according to claim 5 or 6, **characterized in that** the rotation bearing portion (15) is formed by a pin-shaped section (16) which is formed integrally with the holding frame (10) and which comprises end sections on both sides, wherein the end sections have a convex geometry and preferably have a circular section geometry and are each supported on a planar section of the holding devicen.

8. Ultrasonic motor according to any one of claims 2 to 7, **characterized in that** the ultrasonic actuator at least at portions of the main surfaces (3) is adhesively bonded to the holding frame (10).

9. Ultrasonic motor according to claim 8, **characterized in that** the sections of the main surfaces of the ultrasonic actuator which are bonded to the holding frame do not represent any portions at which the ultrasonic actuator forms oscillation nodes during operation.

10. Ultrasonic motor according to one of claims 2 to 9, **characterized in that** the holding frame (10) comprises polyetheretherketone and preferably consists of polyetheretherketone.

11. Ultrasonic motor according to any one of the preceding claims, **characterized in that** a housing for accommodating the control electronics of the ultrasonic actuator is integrally formed with the holding device (11).

12. Drive device comprising an ultrasonic motor according to one of claims 1 to 11 and an element to be driven by the ultrasonic motor.

## Revendications

1. Moteur ultrasonique (1), pourvu d'un actionneur ultrasonique (2) sous la forme d'une plaque comprenant deux surfaces principales (3) de superficie la plus importante et placées en vis-à-vis, et au moins quatre surfaces latérales (4), reliant l'une à l'autre les surfaces principales, sur l'une des surfaces latérales étant placé au moins un élément de friction (5) pourvu d'un point de friction prévu pour le contact par friction avec un élément qu'il s'agit d'entraîner ou pourvu d'une surface de friction, et comprenant au moins un support (6), dans lequel l'actionneur ultrasonique est inséré, la direction d'une ligne de liaison V, laquelle s'écoule à travers le point de friction ou la surface de friction et le point de gravité S de l'actionneur ultrasonique définissant une direction d'impact et un plan que traverse la ligne de liaison sous un angle sensiblement perpendiculaire et qui coupe l'actionneur ultrasonique définissant un plan d'impact W et le support (6) comportant au moins deux segments d'introduction des forces (7) lesquels introduisent une force dans le support pour déplacer celle-ci et à l'aide de celle-ci l'actionneur ultrasonique dans une direction parallèle à la direction d'impact, les segments d'introduction des forces (7) étant placés respectivement dans le plan d'impact W et latéralement à côté de et avec un écart par rapport à l'actionneur ultrasonique, et le point d'intersection SP de la ligne de liaison V avec le plan d'impact W coïncidant soit avec le point de gravité ou étant situé entre le point de gravité S de l'actionneur ultrasonique et la surface latérale de l'actionneur ultrasonique, sur laquelle est placé l'élément de friction, **caractérisé en ce qu'**au moins l'un des segments d'introduction des forces (7) est formé d'un premier aimant permanent (8) et de deux deuxièmes aimants permanents (9) placés respectivement au vis à vis du premier aimant permanent et le premier aimant permanent (8) et les deux deuxièmes aimants permanents (9) coopérant de telle sorte que l'un des deuxièmes aimants permanents (9) exerce sur le premier aimant permanent (8) une force d'attraction, et l'autre des deuxièmes aimants permanents (9) exerce sur le premier aimant permanent (8) une force répulsive.

2. Moteur ultrasonique selon la revendication 1, **caractérisé en ce que** le support (6) comporte un cadre de support (10), dans lequel l'actionneur ultrasonique est maintenu sans jeu et un dispositif de support (11), qui coopère avec le cadre de support (10)

3. Moteur ultrasonique selon la revendication 2, **caractérisé en ce que** le support (6) comporte un segment de guidage linéaire (12) qui est formé par des segments correspondants du cadre de support (10) et du dispositif de support (11) et qui admet un déplacement linéaire de l'actionneur ultrasonique dans une direction parallèle à la direction d'impact et simultanément une rotation de l'actionneur ultrasonique autour d'un axe K, qui s'écoule à travers l'actionneur ultrasonique, sensiblement à la parallèle de la surface latérale sur laquelle est placé l'élément de friction et sensiblement à la parallèle de l'une des surfaces principales.

4. Moteur ultrasonique selon la revendication 3, **caractérisé en ce que** le segment de guidage linéaire (12) est formé par au moins un évidement (13) sensiblement en forme de fente dans le dispositif de support (11) et par au moins un segment saillant (14) façonné en correspondance du cadre de support (10).

5. Moteur ultrasonique selon l'une quelconque des revendications 3 ou 4, **caractérisé en ce que** le support (6) comporte au moins un segment de logement en rotation (15) qui est formé par des segments correspondants du cadre de support et du dispositif de support et qui admet une rotation de l'actionneur ultrasonique autour de l'axe K, le segment de logement en rotation admettant simultanément un déplacement linéaire de l'actionneur ultrasonique dans une direction parallèle à la direction d'impact.

6. Moteur ultrasonique selon l'une quelconque des revendications 4 à 5, **caractérisé en ce que** par le segment de guidage linéaire et/ou par le segment de logement en rotation, tous les autres degrés de liberté de mouvement de l'actionneur ultrasonique sont empêchés.

7. Moteur ultrasonique selon la revendication 5 ou 6, **caractérisé en ce que** le segment de logement en rotation (15) est formé d'un segment (16) en forme de tige, réalisé intégralement avec le cadre de support (10), pourvu de segments d'extrémité (17) bilatéraux, les segments d'extrémité présentant une géométrie convexe et de préférence une géométrie en segment de cercle et s'appuyant respectivement sur un segment plan du dispositif de support.

8. Moteur ultrasonique selon l'une quelconque des revendications 2 à 7, **caractérisé en ce qu'**au moins sur des segments des surfaces principales (3), l'actionneur ultrasonique est collé sur le cadre de support (10).

9. Moteur ultrasonique selon la revendication 8, **caractérisé en ce que** les segments des surfaces principales de l'actionneur ultrasonique qui sont collés sur le cadre de support ne représentent pas des segments sur lesquels l'actionneur ultrasonique forme en service des nœuds vibratoires.

10. Moteur ultrasonique selon l'une quelconque des revendications 2 à 9, **caractérisé en ce que** le cadre de support (10) comporte du polyétheréthercétone et est constitué de préférence en polyétheréthercétone.

11. Moteur ultrasonique selon l'une quelconque des revendications précédentes, **caractérisé en ce qu'**avec le dispositif de support (11) est formé en intégralité un boîtier destiné à réceptionner l'électronique de commande de l'actionneur ultrasonique.

12. Dispositif d'entraînement, comprenant un moteur ultrasonique selon l'une quelconque des revendications 1 à 11 et un élément qui doit être entraîné par le moteur ultrasonique.
